# EUROPEAN PATENT SPECIFICATION

(11) **EP 1 748 661 B1**
(45) Date of publication and mention of the grant of the patent: **03.03.2010**
(21) Application number: 06117976.8
(22) Date of filing: 27.07.2006
(51) Int. Cl.: H04W 8/18

(54) **System and method to configure the parameters of a mobile system**
System und Verfahren zur Konfigurierung von Parametern eines mobilen Systems
Sytème et procédé de configuration des parametres d'un système mobile

(30) Priority: 29.07.2005 CN 200510088756
(43) Date of publication of application: 31.01.2007
(73) Proprietor: Huawei Technologies Co., Ltd., Longgang District, Shenzhen, Guangdong Province 518129 (CN)
(72) Inventor: Guo, Ping, 518129, Shenzhen, Guangdong Province (CN); Pan, Shengxi, 518129, Shenzhen, Guangdong Province (CN); Yang, Pengliang, 518129, Shenzhen, Guangdong Province (CN); Li, Jilin, 518129, Shenzhen, Guangdong Province (CN)
(74) Representative: Gleiter, Hermann

(56) References cited:
- EP-A- 1 383 352
- WO-A-01/93612
- US-A- 5 999 811

## Description

### Field of the Invention

The present invention relates to a mobile communication technology, and more particularly to a mobile station and a parameter configuring system and method for the mobile station.

### Background of the Invention

With the development of the mobile communication services, people begin to obtain more and more services such as the multi-media service, Internet service and mail service by using the mobile station. However, people have to change the SIM (User Identity Module) card when they change the operators because of the change of work place, etc. at this time, the network parameters for accessing the services such as the multi-media service, Internet service and mail service need to be reconfigured.

In the related art, the network parameters can only be configured with the cooperation from the user, i.e. the user manually sends the request for configuring the network parameters to the network side and finishes the configuration of the network parameters according to the network parameters replied by the network side. In addition, since the network parameters for the mobile station are limited by the operator's definitions, the user has to know the definitions of the network parameters of each operator before configuring the network parameters for the mobile station. Apparently, the configuration of the network parameters with the cooperation from the user in the related art is quite inconvenient for the user.

Document WO0193612, relates to a method of managing control data of a mobile station(MS), in which method a triggering condition is defined for changing the control data are stored in the MS, the triggering condition is stored in the subscriber identity module(SIM), the SIM monitors the triggering condition, when the triggering condition is found to be fulfilled, the SIM receives information on control data to be transferred to the MS, and issues a control data reception command to a mobile equipment(ME).

### Summary of the Invention

The object of the present invention is to provide a mobile station and a parameter configuring system and method for the mobile station, which can automatically configure the network parameters for the mobile station.

This object is solved by the system according to claim 1, the method according to claim 5 and the mobile station according to claim 12 as well as their dependent claims.

The present invention provides a parameter configuring system for the mobile station; the system includes a mobile station and a corresponding database server,
the mobile station includes an identification module for identifying the operator identification, when the mobile station changes the SIM card, reading the operator identification in the current SIM card and generating a parameter configuration request according to the read operator identification, a communication module for sending the parameter configuration request generated by the identification module to the database server and receiving a network parameter returned from the database server, and a file module for configuring the current network parameter for the mobile station according to the network parameter received by the communication module;
the database server includes a database for storing the network parameter of each operator, a communication module for receiving the parameter configuration request from the mobile station, and a parameter processing module for querying the database according to the parameter configuration of the communication module and obtaining the network parameter from the database, which is sent to the mobile station through the communication module.

The mobile station further includes an operator identification storage for storing the operator identification in the current SIM card of the mobile station.

In the parameter configuring system, the mobile station accesses the database server through the communication network which realizes the communication between the mobile station and the database server.

The present invention also provides a parameter configuring method for the mobile station. The method includes the following steps:
When the mobile station changes the SIM card ,the mobile station reads the operator identification in the current SIM card of the mobile station;
the mobile station generates a parameter configuration request according to the read operator identification and sends the parameter configuration request to the database server;
the database server queries the database according to the above parameter configuration request and sends the query result to the mobile station;
the mobile station configures the current network parameter for the mobile station according to the query result.

In the process of the mobile station sending a parameter configuration request to the database server according to the read operator identification, if the read operator identification in the current SIM card of the mobile station is the same with that stored in the operator identification storage, the process ends; if the read operator identification in the current SIM card is different from that stored in the operator identification storage, the mobile station generates as parameter configuration request according to the operator identification stored in the current SIM card of the mobile station, then sends the parameter configuration request to the database server, and updates the operator identification stored in the operator identification storage to the operator identification in the current SIM card of the mobile station.

In the process of the database server querying the database according to the above parameter configuration request and sending the query result to the mobile station, if the query result is success, the database server sends the queried network parameter to the mobile station; if the query result is failure, the database server sends the information of query failure to the mobile station.

In the process of the mobile station configuring the current network parameter for the mobile station according to the query result, if the query result is success, the database server configures the current network parameter according to the received network parameter; otherwise, it turns to the failure processing.

The database server maintains the database.

The present invention also provides a mobile station, wherein the mobile station includes am identification module which is used to identify the operator identification, when the mobile station changes the SIM card, the identification module reading the operator identification in current the SIM card and to generate the parameter configuration request according to the read operator identification, a communication module which is used to send the parameter configuration request generated by the identification module to the database server and to receive the network parameters returned from the database server, and a file module which is used to configure the current network parameters for the mobile station according to the network parameters received by the communication module.

According to the present invention, the auto-update of the configuration of the network parameters for the mobile station makes it not necessary for the user to manually set the network parameters when changing the SIM card, and as a result, it is convenient and time efficient for the user.

### Brief Description of the Drawings

Figure 1 is a schematic diagram showing architecture of the parameter configuring system for the mobile station according to an embodiment the present invention;
Figure 2 is a schematic diagram showing architecture of the parameter configuring system for the mobile station according to another embodiment of the present invention;
Figure 3 is a flow chart showing the parameter configuring method for the mobile station according to the present invention.

### Detailed Description of the Invention

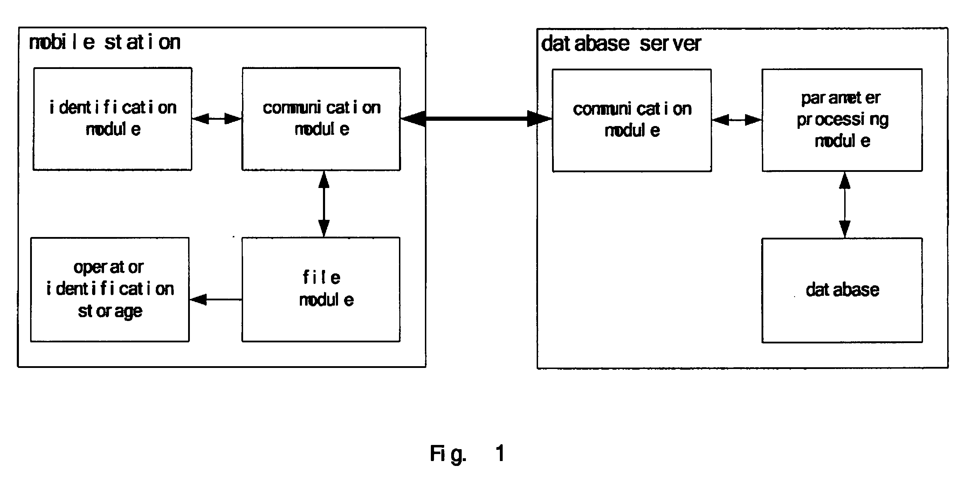

The present invention will be illustrated in detail with reference to the drawings and embodiments in order to make the object, solution and advantages of the present invention more apparent. It should be noted that the embodiments here are only for the purpose of illustration and are not intended to limit the present invention.
As shown in Figure 1, an embodiment of the present invention provides a parameter configuring system for the mobile station, which is applied to the auto-update of the configuration of network parameter for the mobile station. The parameter configuring system includes a mobile station and a corresponding database server, and the mobile station can be directly connected to the corresponding database server.

The parameter configuring system for the mobile station in the present embodiment will be described in detail.

The mobile station thereof is arranged for generating a parameter configuration request and sending the parameter configuration request to the database server, and receiving network parameters returned from the database server and configuring the current network parameter for the mobile station according to the obtained network parameter.

The mobile station includes an identification module, a communication module and a file module.

The identification module identifies the operator identification in the SIM card and generates a parameter configuration request according to the operator identification.

The communication module sends the parameter configuration request generated by the identification module to the database server and receives the network parameter returned from the database server.

The file module configures the current network parameter for the mobile station according to the network parameter received by the communication module.

The operator identification storage can be further set in the mobile station, which is used to store the operator identification. When the mobile station changes the SIM card and the operator identification stored in the SIM card changes accordingly, the operator identification stored in the operator identification storage is accordingly updated to the operator identification stored in the current SIM card.

The database server thereof is provided for storing the network parameters, querying the network parameters according to the parameter configuration request transmitted from the mobile station and sending the obtained network parameters to the mobile station.

The database server includes a database, a communication module and a parameter processing module.

The database stores the network parameter of each operator.

The communication module receives the parameter configuration request transmitted from the mobile station.

The parameter processing module queries the database according to the parameter configuration request received by the communication module and obtains the network parameters from the database.

And the communication module sends the network parameters obtained by the parameter processing module to the mobile station.

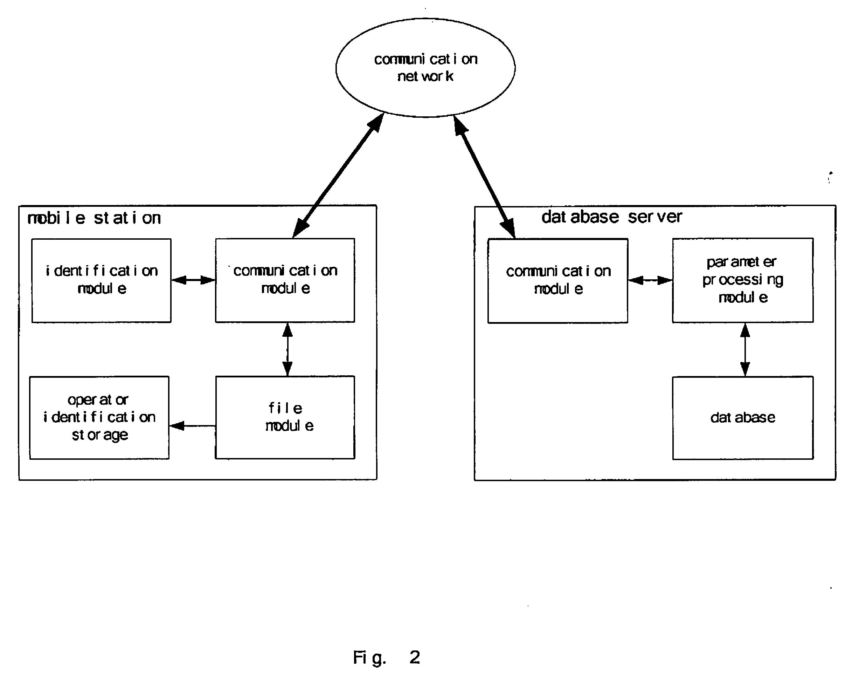

The above mobile station can be directly connected to the database server and the mobile station can obtain the network parameters from the database server so as to finish the configuration of the network parameters. Figure 2 shows in the present invention, the mobile station may also access the database server through the communication network, i.e. the mobile station can communicate with the database server through the communication network. The communication network may be the next generation network, Internet or the wireless access network.

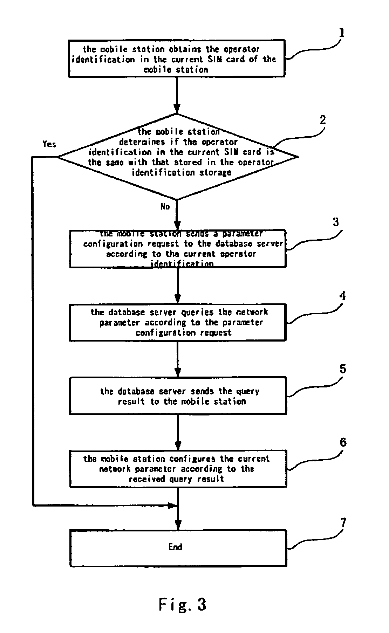

Another embodiment of the present invention provides a parameter configuring method for the mobile station, as shown in Figure 3, which includes the following steps:
Step 1, the mobile station obtains the operator identification in the current SIM card of the mobile station.
Since the operator identification is included in the SIM card, the mobile station can obtain the current operator identification by reading the operator identification stored in the current SIM card.
Step 2, the mobile station determines whether the operator identification in the current SIM card is the same with that stored in the operator identification storage, if yes, the procedure proceeds to step 7 in which the current network parameters for the mobile station need not be updated and the procedure is ended; otherwise, the procedure proceeds to step 3.
Step 3, the mobile station updates the operator identification stored in the operator identification storage to the operator identification in the current SIM card of the mobile station, generates a parameter configuration request according to the operator identification in the current SIM card and sends the parameter configuration request to the database server. The parameter configuration request includes the information of the operator identification read from the current SIM card.
After the mobile station updates the operator identification stored in the operator identification storage to the operator identification read from the current SIM card of the mobile station. Accordingly, the operator identification stored in the operator identification storage is the operator identification corresponding to the current SIM card. When the SIM card is once again changed, the operator identification in the newly changed SIM card is compared with the currently stored one to see if the operator identification of the newly changed SIM card is the same with the currently stored operator identification, if they are different, the currently stored operator identification will be updated to that in the newly changed SIM card.
Step 4, the database server queries the network parameter according to the received parameter configuration request. The database server queries the database according to the operator identification in the received parameter configuration request. If the query is successful, the network parameter defined by the operator is obtained; otherwise, the query failure information is obtained.
The database includes the identification of each operator and their defined network parameters. Since currently there are hundreds of PLMNs (Public Land Mobile Network) in the world, the workload to establish and maintain the database is comparatively small and easy. The database server maintains the database, i.e. updates the database in time according to the definitions of the mobile operators. The following table lists the identity and name of the PLMN, i.e. the PLMN ID in the first column represents the operator identification, the NAME in the second column represents the operator name and the third column represents the network parameters corresponding to the operator.

| PLMN ID | NAME | NETWORK PARAMETER |
|---|---|---|
| China Mobile | China Mobile | APN: cmwap |
| PLMN Number | | Wap gateway: |
| | | IP address: 10.0.0.172 |
| | | IP port: 0 |
| | | Proxy user name: null |
| | | Proxy password: null |
| Malaysia Celcom | Malaysia Celcom | APN: Celcom3G |
| PLMN Number | | Wap gateway: |
| | | IP address: 10.128.1.242 |
| | | IP port: 8080 |
| | | Proxy user name: null |
| | | Proxy password: null |

The database can be a distributed database and the related backups or mappings can be established in different countries or regions so that the network parameters for the mobile station can be updated and configured at any place.
Step 5, the database server sends the query result to the mobile station.
If the query result is success, the database server sends the queried network parameter to the mobile station; and if the query result is failure, the database server sends the information of query failure to the mobile station.
Step 6, the mobile station configures the current network parameters according to the received query result. If the query result is success, the mobile station configures the current network parameter according to the received network parameter, otherwise, it turns to the failure processing, for example, the mobile station notifies the user of "The network parameter configuration fails, and please contact your operator".
Step 7, the procedure ends.

In the above parameter configuring method for the mobile station, in the step 2, the mobile station determines whether the operator identification in the current SIM card is the same with that stored in the operator identification storage, if yes, uses the stored operator identification, and if not, sends the parameter configuration request to the database server according to the operator identification read from the current SIM card. In the present invention, it is also feasible if the mobile station doesn't determine whether the operator identification in the current SIM card is the same with that stored in the operator identification storage, and once the mobile station changes the SIM card, the mobile station generates a parameter configuration request according to the operator identification in the current SIM card and sends the parameter configuration request to the database server; the database server queries the database according to the received parameter configuration request and sends the query result to the mobile station; and the mobile station reconfigures its network parameters according to the query result.

The parameter configuring method of the present embodiment will be briefly illustrated with an example.

Supposing a Malaysian comes to China, his SIM card needs to be replaced by a new one so as to substitute his SIM card used in Malaysia as one able to be used in China, i.e. the SIM card provided by Malaysia Celcom is replaced by the one provided by China Mobile. At this time, according to the present embodiment, the identification module of the mobile station can obtain the current operator identification from the current SIM card.

The mobile station determines whether the operator identification (China Mobile) in the current SIM card is the same with that (Malaysia Celcom) stored in the operator identification storage, if not, the mobile station updates the operator identification stored in the operator identification storage with the China Mobile identity so that when the SIM card needs to be once again changed, the operator identification of the newly changed SIM card can be compared with that of the former SIM card, then it generates a parameter configuration request according to the China Mobile identification and then sends it to the database server. The parameter configuration request includes the information of China Mobile identification.

The database server queries the network parameter according to the received parameter configuration request, obtains the network parameter defined by China Mobile and sends the network parameter of China Mobile to the mobile station. The mobile station configures the current network parameter according to the received network parameter.

Thus, after the SIM card of the mobile station is changed, the mobile station can directly access the network according to the method of the present embodiment, while it doesn't need to contact China Mobile and wait to access the network until the network parameter is configured, so that it is convenient and time efficient for both the user and the operator.

According to the present invention, the auto-update of the configuration of the network parameter for the mobile station makes it not necessary for the user to manually set the network parameters when changing the SIM card, and as a result, it is convenient and time efficient for the user.

## Claims

1. A parameter configuring system for a mobile station, the system comprising a mobile station and a corresponding database server, wherein,
the mobile station comprises an identification module for identifying the operator identification, when the mobile station changes the SIM card, reading the operator identification in the current SIM card and generating a parameter configuration request according to the read operator identification, a communication module for sending the parameter configuration request generated by the identification module to the database server and receiving a network parameter returned from the database server, and a file module for configuring the current network parameter for the mobile station according to the network parameter received by the communication module; and
the database server comprises a database for storing the network parameter of each operator, a communication module for receiving the parameter configuration request transmitted from the mobile station, and a parameter processing module for querying the database according to the parameter configuration request received by the communication module and obtaining the network parameter from the database, which is sent to the mobile station through the communication module.

2. The parameter configuring system for the mobile station according to claim 1, wherein,
the mobile station comprises an operator identification storage for storing the operator identification read from the SIM card of the mobile station.

3. The parameter configuring system for the mobile station according to claim 1, wherein,
the mobile station accesses the database server through a communication network which realizes the communication between the mobile station and the database server, the communication modules of the mobile station and the communication module of the database server are both adapted for transmitting or receiving through the communication network.

4. The parameter configuring system for the mobile station according to claim 3, wherein,
the communication network is the next generation network, Internet or the wireless access network.

5. A parameter configuring method for a mobile station, comprising the steps of:
when the mobile station changes the SIM card, the mobile station reading the operator identification in the current SIM card of the mobile station;
the mobile station generating a parameter configuration request according to the read operator identification and sending the parameter configuration request to a database server;
the database server querying the database according to the above parameter configuration request and sending the query result to the mobile station and
the mobile station configuring the current network parameter for the mobile station according to the query result.

6. The parameter configuring method for the mobile station according to claim 5, wherein,
if the read operator identification in the current SIM card of the mobile station is the same with that stored in the operator identification storage, the process ends.

7. The parameter configuring method for the mobile station according to claim 5, wherein,
if the read operator identification in the current SIM card of the mobile station is different from that stored in the operator identification storage, the mobile station generates a parameter configuration request according to the operator identification in the current SIM card of the mobile station and sends the parameter configuration request to the database server.

8. The parameter configuring method for the mobile station according to claim 5, wherein,
if the read operator identification in the current SIM card of the mobile station is different from that stored in the operator identification storage, the mobile station updates the operator identification stored in the operator identification storage to the operator identification in the current SIM card of the mobile station.

9. The parameter configuring method for the mobile station according to claim 5, wherein,
in the process of the database server querying the database according to the above parameter configuration request and sending the query result to the mobile station, if the query result is success, the database server sends the queried network parameter to the mobile station, and if the query result is failure, the database server sends the information of query failure to the mobile station.

10. The parameter configuring method for the mobile station according to claim 9, wherein,
in the process of the mobile station configuring the current network parameter for the mobile station according to the query result, if the query result is success, the database server configures the current network parameter according to the received network parameter, otherwise, it turns to the failure processing.

11. The parameter configuring method for the mobile station according to claim 5, wherein,
the database server maintains the database.

12. A mobile station, comprising:
an identification module for identifying the operator identification, when the mobile station changes the SIM card, the identification module reading the operator identification in the current SIM card and generating a parameter configuration request according to the read operator identification;
a communication module for sending the parameter configuration request generated by the identification module to the database server and receiving the network parameter returned from the database server; and
a file module for configuring the current network parameter for the mobile station according to the network parameter received by the communication module.

13. The mobile station according to claim 12, wherein,
the mobile station further comprises an operator identification storage for storing the operator identification read from the SIM card of the mobile station.

14. The mobile station according to claim 13, wherein,
the mobile station accesses a database server through the communication network which realizes the communication between the mobile station and the database server, the communication module of the mobile station is adapted for communicating with the database server through the communication network.

15. The mobile station according to claim 14, wherein,
the communication network is the next generation network, Internet or the wireless access network.

## Patentansprüche

1. Parameterkonfigurierungssystem für eine Mobilstation, wobei das System eine Mobilstation und einen entsprechenden Datenbankserver umfaßt, wobei
die Mobilstation ein Identifikationsmodul zum Identifizieren der Bedieneridentifikation, wenn die Mobilstation die SIM-Karte wechselt, Lesen der Bedieneridentifikation in der aktuellen SIM-Karte und Erzeugen einer Parameterkonfigurationsanforderung gemäß der gelesenen Bedieneridentifikation, ein Kommunikationsmodul zum Senden der von dem Identifikationsmodul generierten Parameterkonfigurationsanforderung an den Datenbankserver und Empfangen eines von dem Datenbankserver zurückgeschickten Netzparameters und ein Dateimodul zum Konfigurieren des aktuellen Netzparameters für die Mobilstation gemäß dem von dem Kommunikationsmodul empfangenen Netzparameter umfaßt; und
der Datenbankserver eine Datenbank zum Speichern des Netzparameters jedes Bedieners, ein Kommunikationsmodul zum Empfangen der von der Mobilstation übertragenen Parameterkonfigurationsanforderung und ein Parameterverarbeitungsmodul zum Abfragen der Datenbank gemäß der von dem Kommunikationsmodul empfangenen Parameterkonfigurationsanforderung und Erhalten des Netzparameters von der Datenbank, der durch das Kommunikationsmodul zu der Mobilstation gesendet wird, umfaßt.

2. Parameterkonfigurierungssystem für die Mobilstation nach Anspruch 1, wobei die Mobilstation einen Bedieneridentifikationsspeicher zum Speichern der von der SIM-Karte der Mobilstation gelesenen Bedieneridentifikation umfaßt.

3. Parameterkonfigurierungssystem für die Mobilstation nach Anspruch 1, wobei die Mobilstation durch ein Kommunikationsnetz, das die Kommunikation zwischen der Mobilstation und dem Datenbankserver realisiert, auf den Datenbankserver zugreift, wobei die Kommunikationsmodule der Mobilstation und das Kommunikationsmodul des Datenbankservers beide für das Übertragen oder Empfangen durch das Kommunikationsnetz ausgelegt sind.

4. Parameterkonfigurierungssystem für die Mobilstation nach Anspruch 3, wobei das Kommunikationsnetz das Netz der nächsten Generation, das Internet oder das drahtlose Zugangsnetz ist.

5. Parameterkonfigurierungsverfahren für eine Mobilstation, umfassend die folgenden Schritte:
wenn die Mobilstation die SIM-Karte wechselt, liest die Mobilstation die Bedieneridentifikation in der aktuellen SIM-Karte der Mobilstation;
die Mobilstation generiert eine Parameterkonfigurationsanforderung gemäß der gelesenen Bedieneridentifikation und sendet die Parameterkonfigurationsanforderung an einen Datenbankserver;
der Datenbankserver fragt die Datenbank gemäß der obigen Parameterkonfigurationsanforderung ab und sendet das Abfrageergebnis an die Mobilstation und
die Mobilstation konfiguriert den aktuellen Netzparameter für die Mobilstation gemäß dem Abfrageergebnis.

6. Parameterkonfigurierungsverfahren für die Mobilstation nach Anspruch 5, wobei, wenn die gelesene Bedieneridentifikation in der aktuellen SIM-Karte der Mobilstation gleich der in dem Bedieneridentifikationsspeicher gespeicherten ist, der Prozeß endet.

7. Parameterkonfigurierungsverfahren für die Mobilstation nach Anspruch 5, wobei, wenn die gelesene Bedieneridentifikation in der aktuellen SIM-Karte der Mobilstation von der in dem Bedieneridentifikationsspeicher gespeicherten verschieden ist, die Mobilstation eine Parameterkonfigurationsanforderung gemäß der Bedieneridentifikation in der aktuellen SIM-Karte der Mobilstation generiert und die Parameterkonfigurationsanforderung an den Datenbankserver sendet.

8. Parameterkonfigurierungsverfahren für die Mobilstation nach Anspruch 5, wobei, wenn die gelesene Bedieneridentifikation in der aktuellen SIM-Karte der Mobilstation von der in dem Bedieneridentifikationsspeicher gespeicherten verschieden ist, die Mobilstation die in dem Bedieneridentifikationsspeicher gespeicherte Bedieneridentifikation auf die Bedieneridentifikation in der aktuellen SIM-Karte der Mobilstation aktualisiert.

9. Parameterkonfigurierungsverfahren für die Mobilstation nach Anspruch 5, wobei bei dem Prozeß, daß der Datenbankserver die Datenbank gemäß den obigen Parameterkonfigurationsanforderungen abfragt und das Abfrageergebnis an die Mobilstation sendet, wenn das Abfrageergebnis erfolgreich ist, der Datenbankserver den abgefragten Netzparameter an die Mobilstation sendet, und wenn das Abfrageergebnis erfolglos ist, der Datenbankserver die Information über einen Mißerfolg der Abfrage an die Mobilstation sendet.

10. Parameterkonfigurierungsverfahren für die Mobilstation nach Anspruch 9, wobei in dem Prozeß, daß die Mobilstation den aktuellen Netzparameter für die Mobilstation gemäß dem Abfrageergebnis konfiguriert, wenn das Abfrageergebnis erfolgreich ist, der Datenbankserver den aktuellen Netzparameter gemäß dem empfangenen Netzparameter konfiguriert, ansonsten geht er zu der Mißerfolgsverarbeitung.

11. Parameterkonfigurierungsverfahren für die Mobilstation nach Anspruch 5, wobei der Datenbankserver die Datenbank verwaltet.

12. Mobilstation, umfassend:
ein Identifikationsmodul zum Identifizieren der Bedieneridentifikation, wenn die Mobilstation die SIM-Karte wechselt, wobei das Identifikationsmodul die Bedieneridentifikation in der aktuellen SIM-Karte liest und eine Parameterkonfigurationsanforderung gemäß der gelesenen Bedieneridentifikation generiert;
ein Kommunikationsmodul zum Senden der von dem Identifikationsmodul generierten Parameterkonfigurationsanforderung an den Datenbankserver und Empfangen des von dem Datenbankserver zurückgeschickten Netzparameters; und ein Dateimodul zum Konfigurieren des aktuellen Netzparameters für die Mobilstation gemäß dem von dem Kommunikationsmodul empfangenen Netzparameter.

13. Mobilstation nach Anspruch 12, wobei
die Mobilstation weiterhin einen Bedieneridentifikationsspeicher zum Speichern der von der SIM-Karte der Mobilstation gelesenen Bedieneridentifikation umfaßt.

14. Mobilstation nach Anspruch 13, wobei
die Mobilstation auf einen Datenbankserver durch das Kommunikationsnetz zugreift, das die Kommunikation zwischen der Mobilstation und dem Datenbankserver realisiert, und das Kommunikationsmodul der Mobilstation zum Kommunizieren mit dem Datenbankserver durch das Kommunikationsnetz ausgelegt ist.

15. Mobilstation nach Anspruch 14, wobei,
das Kommunikationsnetz das Netz der nächsten Generation, das Internet oder das drahtlose Zugangsnetz ist.

## Revendications

1. Système de configuration de paramètre d'une station mobile, le système comprenant une station mobile et un serveur de base de données correspondant, dans lequel,
la station mobile comprend un module d'identification pour identifier l'identification d'opérateur, quand la station mobile change de carte SIM, lire l'identification d'opérateur dans la carte SIM actuelle et générer une requête de configuration de paramètre en fonction de l'identification d'opérateur lue, un module de communication pour envoyer la requête de configuration de paramètre générée par le module d'identification au serveur de base de données et recevoir un paramètre de réseau renvoyé par le serveur de base de données, et un module de fichiers pour configurer le paramètre de réseau actuel de la station mobile en fonction du paramètre de réseau reçu par le module de communication ; et
le serveur de base de données comprend une base de données pour mémoriser le paramètre de réseau de chaque opérateur, un module de communication pour recevoir la requête de configuration de paramètre transmise par la station mobile, et un module de traitement de paramètre pour interroger la base de données en fonction de la requête de configuration de paramètre reçue par le module de communication et obtenir le paramètre de réseau depuis la base de données, qui est envoyé à la station mobile par le biais du module de communication.

2. Système de configuration de paramètre de la station mobile selon la revendication 1, dans lequel,
la station mobile comprend une mémoire d'identification d'opérateur pour mémoriser l'identification d'opérateur lue sur la carte SIM de la station mobile.

3. Système de configuration de paramètre de la station mobile selon la revendication 1, dans lequel,
la station mobile sollicite le serveur de base de données par le biais d'un réseau de communication qui réalise la communication entre la station mobile et le serveur de base de données, le module de communication de la station mobile et le module de communication du serveur de base de données sont tous les deux adaptés pour émettre et recevoir par le biais du réseau de communication.

4. Système de configuration de paramètre de la station mobile selon la revendication 3, dans lequel,
le réseau de communication est le réseau de prochaine génération, l'Internet ou le réseau d'accès sans fil.

5. Procédé de configuration de paramètre d'une station mobile comprenant les étapes suivantes :
quand la station mobile change de carte SIM, lecture par la station mobile de l'identification d'opérateur dans la carte SIM actuelle de la station mobile ;
génération par la station mobile d'une requête de configuration de paramètre en fonction de l'identification d'opérateur lue, et envoi par celle-ci de la requête de configuration de paramètre à un serveur de base de données ;
interrogation par le serveur de base de données de la base de données en fonction de la requête de configuration de paramètre ci-dessus et envoi par celui-ci du résultat de la requête à la station mobile ; et
configuration par la station mobile du paramètre de réseau actuel de la station mobile en fonction du résultat de la requête.

6. Procédé de configuration de paramètre de la station mobile selon la revendication 5, dans lequel,
si l'identification d'opérateur lue sur la carte SIM actuelle de la station mobile est la même que celle mémorisée dans la mémoire d'identification d'opérateur, le processus prend fin.

7. Procédé de configuration de paramètre d'une station mobile selon la revendication 5, dans lequel,
si l'identification d'opérateur lue sur la carte SIM actuelle de la station mobile est différente de celle mémorisée dans la mémoire d'identification d'opérateur, la station mobile génère une requête de configuration de paramètre en fonction de l'identification d'opérateur dans la carte SIM actuelle de la station mobile et envoie la requête de configuration de paramètre au serveur de base de données.

8. Procédé de configuration de paramètre de la station mobile selon la revendication 5, dans lequel,
si l'identification d'opérateur lue sur la carte SIM actuelle de la station mobile est différente de celle mémorisée dans la mémoire d'identification d'opérateur, la station mobile actualise l'identification d'opérateur mémorisée dans la mémoire d'identification d'opérateur avec l'identification d'opérateur figurant dans la carte SIM actuelle de la station mobile.

9. Procédé de configuration de paramètre de la station mobile selon la revendication 5, dans lequel,
dans le processus d'interrogation par le serveur de base de données de la base de données en fonction de la requête de configuration de paramètre ci-dessus et d'envoi par celui-ci du résultat de la requête à la station mobile, si le résultat de la requête est positif, le serveur de base de données envoie le paramètre de réseau interrogé à la station mobile, et si le résultat de l'interrogation est négatif, le serveur de base de données envoie l'information d'échec d'interrogation à la station mobile.

10. Procédé de configuration de paramètre de la station mobile selon la revendication 9, dans lequel,
dans le processus de configuration par la station mobile du paramètre de réseau actuel de la station mobile en fonction du résultat de la requête, si le résultat de la requête est positif, le serveur de base de données configure le paramètre de réseau actuel en fonction du paramètre de réseau reçu, si non il passe au traitement associé à un résultat négatif.

11. Procédé de configuration de paramètre de la station mobile selon la revendication 5, dans lequel,
le serveur de base de données tient à jour la base de données.

12. Station mobile, comprenant :
un module d'identification pour identifier l'identification d'opérateur, quand la station mobile change de carte SIM, le module d'identification lisant l'identification d'opérateur dans la carte SIM actuelle et générant une requête de configuration de paramètre en fonction de l'identification d'opérateur lue ;
un module de communication pour envoyer la requête de configuration de paramètre générée par le module d'identification au serveur de base de données et recevoir un paramètre de réseau renvoyé par le serveur de base de données ; et
un module de fichiers pour configurer le paramètre de réseau actuel de la station mobile en fonction du paramètre de réseau reçu par le module de communication.

13. Station mobile selon la revendication 12, dans laquelle,
la station mobile comprend en outre une mémoire d'identification d'opérateur pour mémoriser l'identification d'opérateur lue sur la carte SIM de la station mobile.

14. Station mobile selon la revendication 13, dans laquelle,
la station mobile sollicite un serveur de base de données par le biais du réseau de communication qui réalise la communication entre la station mobile et le serveur de base de données, le module de communication de la station mobile est adapté pour communiquer avec le serveur de base de données par le biais du réseau de communication.

15. Station mobile selon la revendication 14, dans laquelle,
le réseau de communication est le réseau de prochaine génération, l'Internet ou le réseau d'accès sans fil.
